# EUROPÄISCHE PATENTSCHRIFT

(11) **EP 0 828 337 B1**
(45) Veröffentlichungstag und Bekanntmachung des Hinweises auf die Patenterteilung: **09.02.2000**
(21) Anmeldenummer: 97112669.3
(22) Anmeldetag: 24.07.1997
(51) Int. Cl.: H02K 7/12

(54) **Linearer, elektromechanischer Stellantrieb**
Electromechanical linear actuator
Servomoteur électromécanique linéaire

(30) Priorität: 05.09.1996 DE 19636015
(43) Veröffentlichungstag der Anmeldung: 11.03.1998
(73) Patentinhaber: Elektro-Metall Export GmbH, 85053 Ingolstadt (DE)
(72) Erfinder: Johansson, Torbjörn, Dipl.-Ing., 61165 Nyköping (SE); Neumeier, Josef, Dipl.-Ing., 85125 Kinding (DE)
(74) Vertreter: Neubauer, Hans-Jürgen, Dipl.-Phys.

(56) Entgegenhaltungen:
- EP-A- 0 226 065
- DE-A- 2 455 873
- GB-A- 751 790
- US-A- 2 037 735

## Beschreibung

Die Erfindung betrifft einen linearen, elektromechanischen Stellantrieb nach dem Oberbegriff des Anspruchs 1.

Lineare, elektromechanische Stellantriebe sind als sogenannte Aktuators in einer Vielzahl unterschiedlicher Ausführungsformen bekannt. Allgemein besteht ein solcher linearer, elektromechanischer Stellantrieb aus einem Getriebemotor mit einer Abtriebswelle und einem Stellelement, das mit der Abtriebswelle bewegungsübertragend verbunden und linear verstellbar ist. Der Getriebemotor und das Stellelement sind dabei an einem Konsolenteil gelagert, das ein Anbauteil für das zu verstellende Objekt darstellt.

Wenn ein Verstellobjekt, beispielsweise ein Regelventil, kontinuierlich verstellt werden muß, ist der Getriebemotor ständig angesteuert. Vom Verstellelement rückwirkende Kräfte werden dabei ständig vom Getriebemotor aufgenommen und abgestützt.

Bei einer Reihe von Anwendungsfällen sind jedoch nur sukzessive Verstellungen an Verstellobjekten mit teilweise langen, verstellfreien Zwischenpausen erforderlich. Dazu ist es bekannt, den Getriebemotor in diesen Zwischenpausen abzuschalten und den Stellantrieb bzw. das Stellelement gegen rückwirkende Kräfte des Stellobjekts selbsthemmend auszuführen. Das Stellobjekt verstellt sich dann nicht selbständig während der Zwischenpausen, obwohl der Getriebemotor abgeschaltet ist. Die abstützende Gegenkraft gegen die rückwirkenden Kräfte des Stellobjekts werden durch die Selbsthemmung aufgebracht. In der Verstellphase ist jedoch diese Selbsthemmung durch den Getriebemotor zu überwinden, so daß dieser relativ stark dimensioniert werden muß und entsprechend viel Energie verbraucht.

Als selbsthemmende Stellelemente sind beispielsweise Spindelantriebe oder Schneckenantriebe bekannt, bei denen für die erforderliche Selbsthemmung die Steigungen und internen Reibungen so gewählt sind, daß Gegenkräfte abgestützt und aufgenommen werden. Dadurch ist ein relativ schlechter Wirkungsgrad bedingt. Zudem haben solche Stellelemente Toleranzen und Spiel, wodurch bei vielen Schalt- und Stellvorgängen ein Verschleiß gefördert und die Lebensdauer reduziert werden. Die Hemmkraft und Haltelast ist hier durch die Geometrie der Stellelemente bedingt und somit nicht auf einfache Weise einstellbar oder aufhebbar. Im Antriebsfall sind die Flächenpressungen im Stellelement relativ hoch und die Abhängigkeit von Reibwertänderungen ist groß.

Ein bekannter elektromechanischer Stellantrieb (DE 24 55 873 A1) für Absperr- und ähnliche Steuer- oder Regelorgane umfaßt einen auf das zu verstellende Organ über ein Untersetzungsgetriebe einwirkenden Elektromotor und ein ebenfalls auf das zu verstellende Organ wirkendes Handstellglied. Je nach Ausführung und Dimensionierung eines solchen Untersetzungsgetriebes kann damit eine Selbsthemmung erfolgen. Weitere Maßnahmen für eine gezielte Selbsthemmung sind hier nicht vorgesehen.

Zudem ist ein drehbar gelagerter Motor bekannt (GB 751 790) mit einer Motorbremse, die über das Motorgegendrehmoment betätigbar ist. Durch die Motorbremse bzw. durch die Drehung des Stators wird hier die Motorwelle blockierbar bzw. freisetzbar. Eine Verbindung oder Integration in einen Linearantrieb ist nicht beschrieben.

Ferner ist ein linearer elektromechanischer Stellantrieb bekannt (EP 226065) mit einer Kugelgewindespindel, die während antriebsfreien Zeiten von einem Federteil blockiert wird.

Aufgabe der Erfindung ist es, demgegenüber einen linearen, elektromechanischen Stellantrieb so auszubilden, daß bei einfachem Aufbau und gutem Wirkungsgrad während der antriebsfreien Zeit eine Festlegung und Hemmung des Stellelements erfolgt.

Diese Aufgabe wird mit den Merkmalen des Anspruchs 1 gelöst.

Bei einer solchen Anordnung kann ein im Antriebsfall leichtgängiges Stellelement verwendet werden, da im Nichtantriebsfall das Stellelement durch eine Klemm- und Haltekraft gehalten wird. Der Wirkungsgrad im Antriebsfall ist somit hoch. Wegen der Haltekraft im Nichtantriebsfall sind keine selbsthemmenden Anordnungen erforderlich. Als Stellelemente können grundsätzlich alle möglichen Linearstellelemente, bevorzugt Zahnstangenanordnungen, verwendet sein.

Da die Haltekraft und Vorspannung im Antriebsfall am Stellelement reduziert wird oder ganz wegfällt, sind auftretende Flächenpressungen nur gering. Im Nichtantriebsfall ist das Stellelement wegen des Klemmschlusses spielfrei festgelegt, wodurch u.a. auch der Verschleiß reduziert und die Lebensdauer erhöht werden.

Die erforderliche Vorspannung kann an den Spannfedern in an sich bekannter Weise durch unterschiedliche Federstärken auf einfache Weise angepaßt werden. Zudem besteht die Möglichkeit, mit an sich bekannten Anordnungen, die Vorspannung manuell für bestimmte Erfordernisse zu lösen.

Besonders vorteilhaft wird die Aufhebung der Vorspannung während des Antriebsfalls durch die zweifache Ausnutzung des Motordrehmoments des einzigen Getriebemotors durchgeführt. Somit ist für die Aufhebung der Vorspannung in der Spanneinrichtung weder ein eigener Antrieb noch eine eigene Ansteuerung erforderlich. Die Aufhebung der Vorspannung erfolgt vielmehr selbsttätig, wenn der Getriebemotor für einen Verstellvorgang angesteuert und dadurch ein Gegenmoment zum Antriebsmoment aufgebaut wird. Durch diese zweifache Ausnützung des Getriebemotordrehmoments ist die Anordnung einfach und preisgünstig herstellbar.

In einer konkreten Ausführung nach Anspruch 2 hat sich ein Getriebemotor aus einem Elektromotor mit einem vorgesetzten, mehrstufigen Getriebe, insbesondere einem Planetengetriebe, als gut geeignet erwiesen. Zudem ergibt sich hierbei ein kompakter, raumsparender Aufbau.

Als im Antriebsfall leichtgängiges und preiswertes Stellelement wird gemäß Anspruch 3 bevorzugt ein Ausgangsstößel verwendet, der in Querrichtung zu der mit einem Antriebszahnrad versehenen Abtriebswelle angeordnet ist. Der Ausgangsstößel weist wenigstens in einer Länge entsprechend dem maximalen Verstellweg einen Zahnstangenbereich auf, der in das Antriebszahnrad eingreift. Dadurch ergibt sich im wesentlichen eine rechtwinklige Anordnung zwischen der Achse des Getriebemotors und der Stellrichtung. Durch an sich bekannte Ausgestaltungen, insbesondere durch Zwischenübertragungsglieder, sind auch andere Winkelanordnungen, insbesondere auch insgesamt linear ausgerichtete Anordnungen, möglich.

Nach Anspruch 4 ist der Ausgangsstößel in einer Prismenführung formschlüssig verschiebbar gehalten, wobei wenigstens ein Teil der Prismenführung durch das Spannteil gebildet ist. Zweckmäßig wird dazu ein Querschnitt in der Form eines regelmäßigen Sechsecks verwendet. Dadurch ergibt sich eine gute Klemmwirkung des Spannteils durch die Keilflächen der Prismenführung. Wenn die Klemmkraft des Spannteils im Antriebsfall durch eine entsprechende Wahl der Nockengeometrie und der Spannfeder nur reduziert und nicht ganz aufgehoben wird, ergibt sich eine praktisch spielfreie Verstellung.

Als Spannfeder können zweckmäßig Tellerfedern verwendet werden, die in einem Federpaket nach Anspruch 6 zusammenfaßbar sind.

Eine besonders einfache und kompakte Anordnung ergibt sich nach Anspruch 7 dadurch, daß die Übertragungsvorrichtung zusammen mit der Nockenanordnung als Winkelhebel ausgebildet ist. Dazu ist ein erster Hebelarm drehbar in einer Querrichtung zum Stellelement anliegend an eine in Entlastungsrichtung bewegbare Spannfederabstützung gelagert. Die Anlagefläche dieses Hebelarms an der Spannfederabstützung ist dabei als Nocken ausgebildet. Der zweite Hebelarm liegt am verdrehbaren Motorgehäuse an und ist bei einer Verdrehung des Motorgehäuses für eine Nockenverstellung verschwenkbar.

Je nach einem Links- oder Rechtslauf des Getriebemotors wird durch das Gegendrehmoment das Motorgehäuse in die jeweilige Gegenrichtung zurückverdreht und damit durch ein Verschwenken des zweiten Hebelarms und einen dadurch bedingten Nockenhub die Haltekraft für das Stellelement reduziert oder aufgehoben.

Eine besonders einfach und preisgünstig herstellbare Nockenstruktur ergibt sich nach Anspruch 8 bei einer Ausbildung des ersten Hebelarms als zylindrische Achse, wobei der Nocken an der Anlagefläche durch ein abgeflachtes Teilstück hergestellt ist.

Die Rückdrehung des Motorgehäuses durch das Gegendrehmoment wird durch die proportional mit der Spannfederauslenkung ansteigende Federkraft abgestützt. Für gewisse Anwendungsfälle ist nur eine geringe Rückdrehung des Motorgehäuses und lediglich eine Reduzierung der Haltekraft der Spannfeder gewünscht. Insbesondere kann dadurch eine spielfreie Führung des Antriebsstößels während der Verstellphase, jedoch unter Umständen mit relativ hoher Verstellreibung, erreicht werden. Für diesen Fall wird das Gegendrehmoment des Motorgehäuses zweckmäßig nur über die Spannfeder abgestützt.

In anderen möglichen Einsatzfällen, insbesondere wenn das Spannteil vom Stellelement im Antriebsfall ganz abgehoben und die Haltekraft ganz aufgehoben werden soll, kann ein fester Anschlag gemäß Anspruch 9 am Konsolenteil möglich werden, der das rückdrehende Motorgehäuse abstützt.

Anhand einer Zeichnung wird ein Ausführungsbeispiel der Erfindung mit weiteren Einzelheiten, Merkmalen und Vorteilen näher erläutert.

Es zeigen:

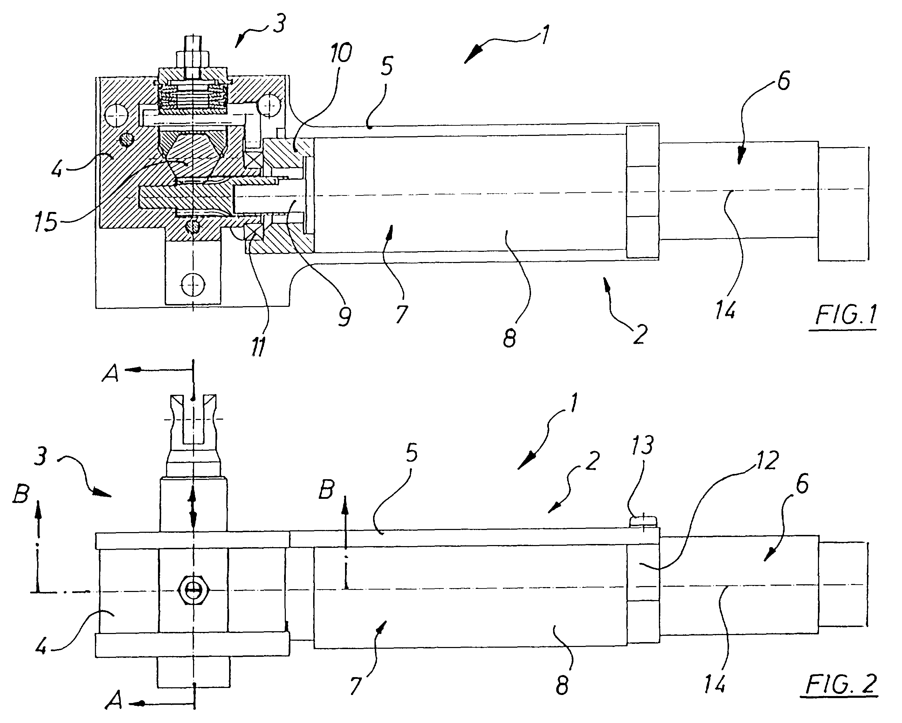

- Fig. 1: eine teilweise geschnittene Längsansicht eines Stellantriebs,
- Fig. 2: eine Draufsicht auf den Stellantrieb nach Fig. 1,
- Fig. 3: einen Schnitt entlang der Linie A-A aus Fig. 2 und
- Fig. 4: einen Schnitt entlang der Linie B-B aus Fig. 2.

In den Figuren ist ein linearer, elektromechanischer Stellantrieb 1 dargestellt, mit einem Getriebemotor 2 und einer Stelleinheit 3. Die Stelleinheit 3 und der Getriebemotor 2 sind an einem Konsolenteil gehalten, das aus einem Aufnahmegehäuse 4 und einer daran angeschlossenen Tragplatte 5 besteht.

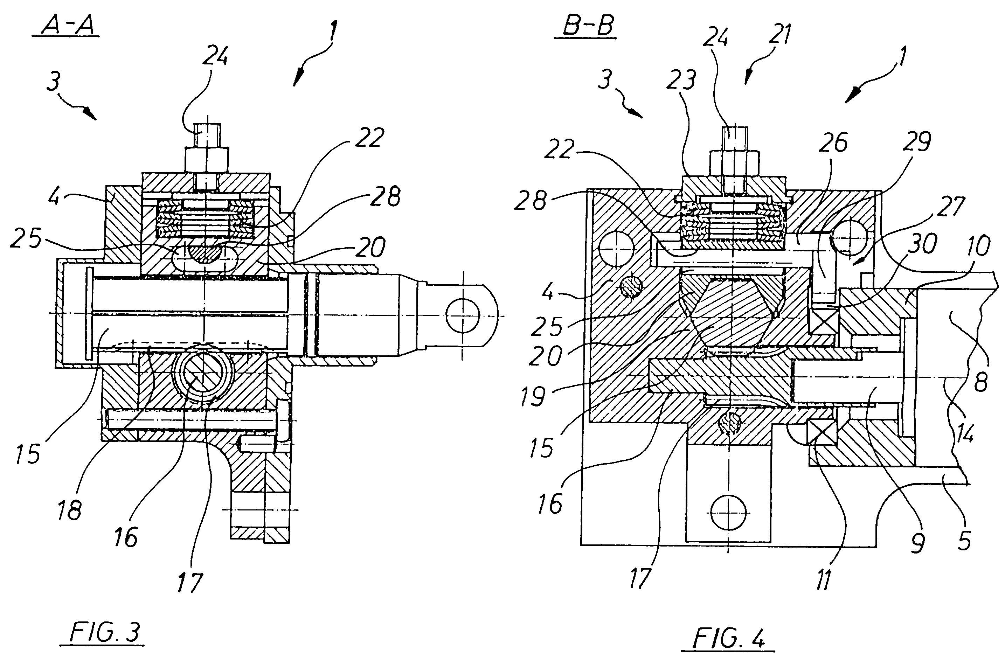

Der Getriebemotor 2 umfaßt einen Elektromotor 6 und ein vorgeschaltetes, mehrstufiges Getriebe 7. Beide Teile sind in einem rohrförmigen Motorgehäuse 8 enthalten. An der Stirnseite des Getriebes 7 ragt eine Abtriebswelle 9 aus dem Motorgehäuse 8. In diesem Bereich ist der Getriebemotor 2 bzw. sein Motorgehäuse 8 über einen fest damit verbundenen Zwischenring 10 am Aufnahmegehäuse 4 über ein Kugellager 11 drehbar gelagert. Zudem ist die andere Seite des Motorgehäuses 8 in einem Lagerring 12 gehalten, der über eine Verschraubung 13 mit der Tragplatte 5 verbunden ist. Im rechten Winkel und etwas versetzt zur Achse 14 der Abtriebswelle 9 verläuft als Stellelement ein linear verstellbarer Ausgangsstößel 15, der im Querschnitt eine regelmäßige Sechskantform aufweist. Die Führung und Verstellung des Ausgangsstößels 15 wird näher anhand der vergrößerten Schnittdarstellungen nach Fig. 3 und Fig. 4 erläutert.

Auf die Abtriebswelle 9 ist ein Wellenteil 16 aufgesetzt, das im Bereich des Ausgangsstößels 15 als Antriebszahnrad 17 ausgebildet ist. Der Ausgangsstößel 15 weist einen Zahnstangenbereich 18 in der Länge des maximalen Verstellwegs auf, der in das Antriebszahnrad 17 eingreift.

Der Ausgangsstößel 15 ist in einer Prismenführung 19 mit entsprechender Querschnittsform geführt. Ein Teil der Prismenführung 19 ist durch ein Spannteil 20 einer Spanneinrichtung 21 gebildet.

Die Spanneinrichtung 21 umfaßt weiter ein Federpaket 22, das einerseits über ein einstellbares Abstützelement 23 am Konsolenteil und andererseits am Spannteil 20 abgestützt ist. Die Federspannung kann durch eine Einstellschraube 24 verändert werden. Durch das Federpaket 22 ist das Spannteil 20 auf den Ausgangsstößel 15 hin vorgespannt.

Durch eine Durchgangsöffnung 25 des Spannteils 20 ist ein erster Hebelarm 26 eines L-förmigen Winkelhebels 27 geführt. Dieser Hebelarm 26 liegt mit einer abgeflachten Anlagefläche 28 zur Federpaketseite hin am Spannteil 20 an und ist beidseitig und querverlaufend zum Ausgangsstößel 15 im Aufnahmegehäuse 4 verdrehbar gelagert. Die abgeflachte Anlagefläche 28 stellt eine Nockenanordnung dar.

Der zweite Hebelarm 29 des Winkelhebels 27 ist in Richtung auf das Motorgehäuse 8 hin bzw. den damit verbundenen Zwischenring 10 hin abgewinkelt und liegt dort mit einer Endseite in einer Mitnehmervertiefung 30 des Zwischenrings 10.

Die dargestellte Anordnung hat folgende Funktion:

In der dargestellten Position ist der Getriebemotor 2 nicht angesteuert, so daß die Abtriebswelle 9 nicht läuft, kein Drehmoment ausgeübt und der Ausgangsstößel 15 nicht verstellt wird. Das über das Federpaket 22 vorgespannte Spannteil 20 hält über seine keilförmigen Anlageflächen den Ausgangsstößel 15 spielfrei in seiner jeweiligen Verstellage fest.

Wenn der Ausgangsstößel 15 linear verstellt werden soll, beispielsweise aus dem Aufnahmegehäuse 4 weiter herausgefahren werden soll, wird der Getriebemotor 2 zu einem Rechtslauf seiner Abtriebswelle 9 bzw. des angeschlossenen Antriebszahnrads 17 angesteuert. Der Ausgangsstößel 15 ist durch das Spannteil 20 vorerst noch eingespannt und festgehalten, so daß die Abtriebswelle 9 bzw. das Antriebszahnrad 17 in ihrem Anlauf gehemmt werden. Dadurch baut sich ein relativ großes Gegendrehmoment in der Gegendrehrichtung am Motorgehäuse 8 auf. Da das Motorgehäuse 8 hier nicht fest am konsolenteil 5 abgestützt, sondern verdrehbar gelagert ist, erfolgt eine (geringe) Verdrehung des Motorgehäuses.

Durch die Verdrehung des Motorgehäuses wird der zweite Hebelarm 29 mitgenommen und verschwenkt. Dadurch wird der erste Hebelarm 26 verdreht und die flache Anlagefläche 28 gegenüber dem Spannteil 20 verkantet. Durch diese Verkantung wird entsprechend einer Nockenanordnung das Spannteil 20 gegen die Federkraft des Federpaketes 22 (geringfügig) angehoben. Damit wird die Haltekraft zwischen dem Spannteil 20 und dem Ausgangsstößel 15 reduziert, so daß dieser ausgeschoben werden kann. Entsprechend baut sich am Motorgehäuse 8 kein größeres Gegendrehmoment für eine Rückverdrehung mehr auf, da die Abtriebswelle 9 in ihrer Drehung nun nicht mehr oder nur wenig gehemmt ist und den Ausgangsstößel 15 ausschieben kann.

Nach Erreichen der gewünschten Verstellposition des Ausgangsstößels 15 schaltet die Steuerung den Getriebemotor 2 wieder ab. Dadurch entfällt das Gegendrehmoment auf das Motorgehäuse 8. Das Federpaket 22 stellt die verkantete Anlagefläche 28 des ersten Hebelarms 26 wieder gerade, wodurch das Spannteil 20 wiederum fest auf den Ausgangsstößel 15 gespannt wird und diesen bis zur nächsten Motoransteuerung festhält.

Der Vorgang läuft entsprechend bei einem Linkslauf der Abtriebswelle 9 und einem Einzug des Ausgangsstößels 15 in das Aufnahmegehäuse 4 ab.

## Patentansprüche

1. Linearer, elektromechanischer Stellantrieb,
bestehend aus einem Getriebemotor (2) mit einer Abtriebswelle (9),
aus einem Stellelement (15), das mit der Abtriebswelle (9) bewegungsübertragend verbunden und linear verstellbar ist, und
aus einem Konsolenteil (4, 5), an der der Getriebemotor (2) und das Stellelement (15) gelagert sind, wobei
dadurch gekennzeichnet, daß
das Motorgehäuse (8) des Getriebemotors (2) koaxial zur Abtriebswelle (9) drehbar an dem Konsolenteil (4, 5) gelagert ist, so daß bei einem durch den Getriebemotor (2) erzeugten Drehmoment an der Abtriebswelle (9), das am Motorgehäuse (8) auftretende Gegendrehmoment das Motorgehäuse wegen dessen drehbarer Lagerung zumindest geringfügig, entgegen der Drehrichtung der Abtriebswelle (9), sowohl bei Linksals auch bei Rechtslauf, jeweils zurückdreht,
das Stellelement (15) durch eine Spanneinrichtung (21) hemmbar und/oder blockierbar ist, die wenigstens ein durch eine Spannfeder (22) belastetes Spannteil (20) aufweist, das auf das Stellelement (15) hin vorgespannt ist,
die Spanneinrichtung (21) eine verstellbare, ebenfalls am Konsolenteil (4, 5) gelagerte Nockenanordnung (28) aufweist, die mit dem Spannteil (20) zusammenwirkt, so daß bei einer Nockengrundstellung die Vorspannung durch das Spannteil (20) als Haltekraft auf das Stellelement (15) wirkt und bei einer Nockenhubstellung die Haltekraft durch ein An- oder Abheben des Spannteils (20) wenigstens reduziert oder aufgehoben ist, und
die Nockenanordnung (28) durch eine Übertragungsvorrichtung (27) mit dem Motorgehäuse (8) verbunden ist, wodurch die durch ein Gegendrehmoment hervorgerufene Zurückdrehung des Motorgehäuses (8) als Hubbewegung auf die Nockenanordnung (28) übertragen wird, so daß während einer Verstellung des Stellelements (15) dessen Blockierung oder Hemmung aufgehoben oder wenigstens reduziert ist.

2. Linearer, elektromechanischer Stellantrieb nach Anspruch 1, dadurch gekennzeichnet, daß der Getriebemotor (2) aus einem Elektromotor (6) mit einem vorgesetzten, mehrstufigen Getriebe (7), bevorzugt einem Planetengetriebe, besteht.

3. Linearer, elektromechanischer Stellantrieb nach Anspruch 1 oder 2, dadurch gekennzeichnet, daß die Abtriebswelle (9) des Getriebemotors (2) ein Antriebszahnrad (17) umfaßt, und
daß das Stellelement ein etwa in Querrichtung zur Abtriebswelle (9) verschiebbarer Ausgangsstößel (15) ist, der wenigstens in einer Länge entsprechend dem maximalen Verstellweg einen Zahnstangenbereich (18) aufweist, und dieser Zahnstangenbereich (18) in das Antriebszahnrad (17) eingreift.

4. Linearer, elektromechanischer Stellantrieb nach Anspruch 3, dadurch gekennzeichnet, daß der Ausgangsstößel (15) in einer Prismenführung (19) formschlüssig verschiebbar gehalten ist, wobei wenigstens ein Teil der Prismenführung (19) durch das Spannteil (20) gebildet ist.

5. Linearer, elektromechanischer Stellantrieb nach Anspruch 4, dadurch gekennzeichnet, daß der Querschnitt der Prismenführung (19) und des Ausgangsstößels (15) im Führungsbereich ein regelmäßiges Sechseck darstellt.

6. Linearer, elektromechanischer Stellantrieb nach einem der Ansprüche 1 bis 5, dadurch gekennzeichnet, daß die Spannfeder als Federpaket (22) ausgebildet ist.

7. Linearer, elektromechanischer Stellantrieb nach einem der Ansprüche 1 bis 6, dadurch gekennzeichnet, daß die Übertragungsvorrichtung zusammen mit der Nockenanordnung (28) aus einem L-förmigen Winkelhebel (27) besteht, dessen erster Hebelarm (26) drehbar in einer Querrichtung zum Stellelement (15) anliegend an eine in Entlastungsrichtung bewegbare Spannfederabstützung gelagert ist,
das die Anlagefläche dieses ersten Hebelarms (26) an der Spannfederabstützung als Nocken (28) ausgebildet ist,
daß der zweite Hebelarm (29) am verdrehbaren Motorgehäuse (8) anliegt und durch eine Verdrehung des Motorgehäuses (8) für eine Nockenverstellung verschwenkbar ist.

8. Linearer, elektromechanischer Stellantrieb nach Anspruch 7, dadurch gekennzeichnet, daß der erste Hebelarm (26) als zylindrische Achse ausgebildet gebildet ist und der Nocken an der Anlagefläche durch ein abgeflachtes Teilstück hergestellt ist.

9. Linearer, elektromechanischer Stellantrieb nach einem der Ansprüche 1 bis 8, dadurch gekennzeichnet, daß das Zurückdrehen des Motorgehäuses (8) durch einen Anschlag am Konsolenteil (4, 5) begrenzt ist.

## Claims

1. Linear, electromechanical actuator comprising a geared motor (2) with a drive shaft (9), a control element (15) which is connected to the drive shaft (9) in a fashion transmitting movement and can be adjusted linearly, and a console part (4, 5) on which the geared motor (2) and the control element (15) are mounted, characterized in that the motor housing (8) of the geared motor (2) is mounted rotatably on the console part (4, 5) and coaxially with the drive shaft (9), so that given a torque produced on the drive shaft (9) by the geared motor (2), because of the rotatable mounting of the motor housing (8) the counter-torque occurring on the motor housing turns it back at least slightly in each case against the direction of rotation of the drive shaft (9), both for anti-clockwise rotation and for clockwise rotation, the control element (15) can be braked and/or blocked by a clamping device (21) which has at least one clamping part (20) which is loaded by a tension spring (22) and is preloaded with respect to the control element (15), the clamping device (21) has an adjustable cam arrangement (28) which is likewise mounted on the console part (4, 5) and cooperates with the clamping part (20) so that in the case of a normal cam position the preloading by the clamping part (20) acts as a retaining force on the control element (15), and in the case of a lifted cam position the retaining force is at least reduced or neutralized by raising or lifting off the clamping part (20), and the cam arrangement (28) is connected to the motor housing (8) by a transmission device (27), as a result of which the turning back of the motor housing (8) caused by a counter-torque is transmitted to the cam arrangement (28) as a lifting movement so that the blocking or braking of the control element (15) is neutralized or at least reduced while it is being adjusted.

2. Linear, electromechanical actuator according to Claim 1, characterized in that the geared motor (2) comprises an electric motor (6) with an upstream, multi-stage gear (7), preferably planetary gearing.

3. Linear, electromechanical actuator according to Claim 1 or 2, characterized in that the drive shaft (9) of the geared motor (2) comprises a driving gear wheel (17) and in that the control element is an output plunger (15) which can be displaced approximately in the transverse direction relative to the drive shaft (9) and has a gear rack region (18) at least in the length corresponding to the maximum actuator travel, and this gear rack region (18) engages in the driving gear wheel (17).

4. Linear, electromechanical actuator according to Claim 3, characterized in that the output plunger (15) is held displaceably in a prismatic guide (19), at least a part of the prismatic guide (19) being formed by the clamping part (20).

5. Linear, electromechanical actuator according to Claim 4, characterized in that the cross section of the prismatic guide (19) and of the output plunger (15) constitutes a regular hexagon in the guide region.

6. Linear, electromechanical actuator according to one of Claims 1 to 5, characterized in that the tension spring is constructed as a laminated spring (22).

7. Linear, electromechanical actuator according to one of Claims 1 to 6, characterized in that the transmission device together with the cam arrangement (28) comprises an L-shaped angle lever (27) whose first lever arm (27) is mounted, in a fashion capable of rotating in the transverse direction relative to the control element (15), on a laminated spring support which can be moved in a relieving direction, which bearing surface of this first lever arm (26) is constructed as a cam (28) on the laminated spring support, and that the second lever arm (29) bears against the rotatable motor housing (8) and can be swivelled for a cam adjustment by rotating the motor housing (8).

8. Linear, electromechanical actuator according to Claim 7, characterized in that the first lever arm (26) is constructed as a cylindrical shaft, and the cam on the bearing surface is produced by a flattened segment.

9. Linear, electromechanical actuator according to one of Claims 1 to 8, characterized in that the turning back of the motor housing (28) is limited by a stop on the console part (4, 5).

## Revendications

1. Servomoteur électromécanique, linéaire,
constitué d'un motoréducteur (2) avec un arbre de sortie (9),
d'un élément de réglage (15), relié à l'arbre de sortie (9) en assurant une transmission cinématique et réglable de façon linéaire, et
d'une partie console (4, 5) sur laquelle sont montés le motoréducteur (2) et l'élément de réglage (15),
caractérisé en ce que le boîtier moteur (8) du motoréducteur (2) est monté coaxialement par rapport à l'arbre de sortie (9) de façon à pouvoir tourner, sur la partie console (4, 5), de manière à ce que, dans le cas d'un couple généré par le motoréducteur (2) sur l'arbre de sortie (9) le couple opposé, se produisant sur le boîtier moteur (8) du fait de son montage à possibilité de rotation, provoque chaque fois une rotation inverse, au moins de faible ampleur, à l'encontre du sens de rotation de l'arbre de sortie (9), tant dans le cas de rotation à gauche qu'également de rotation à droite,
l'élément de réglage (15) est susceptible d'être entravé et/ou bloqué par un dispositif de serrage (21) qui présente au moins une partie de serrage (20) sollicitée par un ressort tendeur (22), précontraint sur l'élément de réglage (15),
le dispositif de serrage (21) présente un agencement à cames (28) réglable, également monté sur la partie de console (4, 5), coopérant avec la partie de serrage (20), si bien que, pour une position de base des cames, la précontrainte agit, au moyen de la partie de serrage (20), sous la forme d'une force de maintien, sur l'élément de réglage (15) et dans le cas d'une position de course des cames, la forte de maintien est au moins réduite ou supprimée, par levage ou dégagement de la partie de serrage (20), et
l'agencement à cames (28) est relié, au moyen d'un dispositif de transmission (27), au boîtier moteur (8), faisant que la rotation inverse, provoquée par un couple antagoniste du boîtier moteur (8), est transmise, sous la forme d'un mouvement de course, à l'agencement à cames (28), de manière que, pendant un réglage de l'élément de réglage (15), son blocage ou son entravement soit supprimé ou au moins réduit.

2. Servomoteur électromécanique linéaire selon la revendication 1, caractérisé en ce que le motoréducteur (2) est constitué d'un moteur électrique (6) avec une transmission à tabler (7) à plusieurs rapports, de préférence une transmission planétaire.

3. Servomoteur électromécanique, linéaire selon la revendication 1 ou 2, caractérisé en ce que l'arbre de sortie (9) du motoréducteur (2) comprend une roue dentée d'entraînement (17), et
en ce que l'élément de réglage est un poussoir de sortie (15), réglable à peu près dans la direction transversale de l'arbre de sortie (9), qui présente au moins, de manière correspondante à la course de réglage maximal en longueur, une zone de crémaillère (18) et cette zone de crémaillère (18) s'engrenant dans la roue dentée d'entraînement (17).

4. Servomoteur électromécanique linéaire selon la revendication 3, caractérisé en ce que le poussoir de sortie (15) est maintenu avec possibilité de coulissement, avec une liaison à ajustement de forme, dans un guidage prismatique (19), au moins une partie du guidage prismatique (19) étant constituée par la partie de serrage (20).

5. Servomoteur électromécanique linéaire selon la revendication 4, caractérisé en ce que les sections transversales du guidage prismatique (19) et du poussoir de sortie (15) constituent un hexagone régulier dans la zone du guidage.

6. Servomoteur électromécanique linéaire selon l'une des revendications 1 à 5, caractérisé en ce que le ressort de serrage est réalisé sous la forme d'un paquet de ressorts (22).

7. Servomoteur électromécanique linéaire selon l'une des revendications 1 à 6, caractérisé en ce que le dispositif de transmission, conjointement avec l'agencement à cames (28), est constitué d'un levier coudé (27) en forme de L, dont le premier bras de levier (26) est monté de façon à pouvoir tourner dans une direction transversale par rapport à l'élément de réglage (15), en appui sur un organe d'appui de ressort de serrage, déplaçable dans la direction de la décharge,
en ce que la surface d'appui de ce premier bras de levier (26) sur l'organe d'appui de ressort de serrage est réalisée sous la forme de cames (28),
en ce que le deuxième bras de levier (29) appuie sur le boîtier moteur (8) susceptible de tourner et est susceptible de pivoter par une rotation du boîtier moteur (8) pour un réglage de cames.

8. Servomoteur électromécanique linéaire selon la revendication 7, caractérisé en ce que le premier bras de levier (26) est réalisé sous la forme d'axe cylindrique et la came est constituée sur la face d'appui, au moyen d'une pièce partielle aplatie.

9. Servomoteur électromécanique linéaire selon l'une des revendications 1 à 8, caractérisé en ce que la rotation inverse du boîtier moteur (8) est limitée par une butée prévue sur la partie console (4, 5).
